# EUROPÄISCHE PATENTSCHRIFT

(11) **EP 3 036 729 B1**
(45) Veröffentlichungstag und Bekanntmachung des Hinweises auf die Patenterteilung: **30.06.2021**
(21) Anmeldenummer: 14772075.9
(22) Anmeldetag: 22.08.2014
(51) Int. Cl.: G08G 1/09, H04L 29/08, H04W 40/08, G08G 1/16, H04W 4/02

(54) **FILTERUNG WEITERZULEITENDER DATENPAKETE IM CAR2X-NETZWERK**
FILTERING DATA PACKETS TO BE RELAYED IN THE CAR2X NETWORK
FILTRAGE DE PAQUET DE DONNÉES À RETRANSMETTRE DANS UN RÉSEAU CAR2X

(30) Priorität: 22.08.2013 DE 102013216634
(43) Veröffentlichungstag der Anmeldung: 29.06.2016
(73) Patentinhaber: Continental Teves AG & Co. OHG, 60488 Frankfurt am Main (DE)
(72) Erfinder: GROTENDORST, Thomas, 65760 Eschborn (DE); MENZEL, Marc, 35096 Weimar (Lahn) (DE); SCHERPING, Richard, 65835 Liederbach am Taunus (DE); STÄHLIN, Ulrich, 65760 Eschborn (DE)
(74) Vertreter: Continental Corporation
(86) Internationale Anmeldenummer: PCT/EP2014/067940
(87) Internationale Veröffentlichungsnummer: WO 2015/025048

(56) Entgegenhaltungen:
- EP-A1- 2 178 064
- DE-A1-102006 029 525
- DE-T5-112009 001 557
- US-A1- 2013 083 679

## Beschreibung

Die Erfindung betrifft ein Verfahren zum Weiterleiten eines wenigstens Positionsdaten enthaltenden Datenpakets, das über einem Fahrzeug-Ad-hoc-Netzwerk in einem Übertragungssignal getragen empfangen wird, eine Weiterleitungsvorrichtung zur Durchführung des Verfahrens und einen Transceiver mit der Weiterleitungsvorrichtung.

Aus der WO 2010 / 139 526 A1 ist ein Car2X genanntes mobiles Ad-hoc-Netz bekannt, dessen Knoten bestimmte Straßenverkehrsteilnehmer wie Fahrzeuge oder andere Objekte im Straßenverkehr, wie Ampeln sind. Über diese Netzwerke können den am Car2X-Netzwerk beteiligten Straßenverkehrsteilnehmern Hinweise über Straßenverkehrszustände, wie Unfälle, Staus, Gefahrensituationen, ... bereitgestellt werden.

Die US 2013/083679 A1 beschreibt ein Auswahlverfahren zur Reduzierung des Rechenaufwands eines Fahrzeug-zu-X-Kommunikationssystems, bei dem nur ein Teil der empfangenen Nachrichten durch Neuversenden über das Fahrzeug-zu-X-Kommunikationssystem weitergeleitet werden. Welcher Teil der empfangenen Nachrichten weitergeleitet werden soll, wird anhand von in Fahrzeugen empfangenen Zufallsvariablen von in den Fahrzeugen vorhandenen Recheneinheiten auf probabilistischer Basis entschieden. Die Zufallsvariablen werden dabei von Infrastruktureinrichtungen an Fahrzeuge gesendet. Die Wahrscheinlichkeit für die Weiterleitung einer Nachricht kann der Verkehrsdichte angepasst werden. Ferner werden den Nachrichten Prioritäten zugewiesen, anhand derer die interne im Fahrzeug selbst stattfindende Weiterverarbeitung koordiniert wird, also beispielsweise die Weiterleitung an eine im Fahrzeug aktive Fahrzeugassistenzapplikation.

Die EP 2 178 064 A1 offenbart ein Auswahlverfahren zur Reduzierung des Rechenaufwandes, welches anhand der Signalstärke und Umgebungsinformationen wie Positionsangaben, Fahrtrichtung, Geschwindigkeit, Signalstärke von benachbarten Stationen ermittelt ob eine Station am Rand der Reichweite der sendenden Station gelegen ist. Liegt die Station am Rand der Reichweite der sendenden Station leitet die Station die empfangene Nachricht durch Neuversenden weiter.

Es ist Aufgabe die Nutzung derartiger mobiler Ad-hoc-Netze zu verbessern.

Die Aufgabe wird durch die Merkmale der unabhängigen Ansprüche gelöst. Bevorzugte Weiterbildungen sind Gegenstand der abhängigen Ansprüche.

Dem angegebenen Verfahren liegt die Überlegung zugrunde, dass in einem Fahrzeug-Ad-hoc-Netzwerk je nach Verkehrssituation eine unterschiedlich hohe Datenlast anfallen kann, die dann von den entsprechenden Empfängern in den am Fahrzeug-Ad-hoc-Netzwerk teilnehmenden Fahrzeugen oder anderen Knoten verarbeitet werden muss. Dabei werden in dem Fahrzeug-Ad-hoc-Netzwerk grob gesagt zu versendende Nachrichten zunächst in Datenpaketen verpackt, die dann wiederrum auf ein Übertragungssignal moduliert werden. Entsprechend muss ein Empfänger der versendeten Nachrichten zunächst die Datenpakete aus dem Übertragungssignal filtern und dann die Nachrichten aus den gefilterten Datenpaketen entpacken. Erst dann können die Nachrichten zur Informierung des Fahrers eines Fahrzeuges oder sogar zur aktiven Steuerung des Fahrzeuges verwendet werden. Ein entsprechend rechenintensiver Algorithmus ist auch bei der Weiterleitung notwendig, um beispielsweise anhand einer Umfeldtabelle oder dergleichen über die Weiterleitung an sich zu entscheiden.

Das Filtern aus dem Übertragungssignal und insbesondere das Entpacken der Nachrichten aus den Datenpaketen bedarf entsprechender Rechenressourcen, die je nach aufkommender Datenlast in dem Fahrzeug-Ad-Hoc-Netzwerk entsprechend leistungsfähig dimensioniert sein müssen, wobei sich die Dimensionierung im Extremfall an der maximal möglichen Kanallast orientieren muss. Die maximal mögliche Kanallast wird aber nur in besonders extremen Situationen, wie beispielsweise sehr hohen Verkehrsaufkommen (Stau, ...) ausgenutzt, in denen Fahrzeug-Ad-hoc-Netzwerk in der Regel auch viele Nachrichten mit redundanter Information oder nicht interessierender Information übertragen. Datenpakete, die derartige Nachrichten mit redundanten oder nicht interessierenden Informationen enthalten könnten prinzipiell aussortiert werden.

Eine Entscheidung hierüber ist aber ebenfalls mit einem entsprechen hohen Rechenaufwand verbunden, weil zur Entscheidung über die Information zunächst die diese Information meldende Nachricht entpackt werden muss. Werden die Datenpakete daher basierend auf den mit den Nachrichten gelieferten Informationen gefiltert ist keine besondere Reduktion des Rechenaufwandes und damit der bereitzuhaltenden Rechenressourcen zu erwarten.

Hier greift das angegebene Weiterleitungsverfahren mit der Überlegung an, die Datenpakete nicht basierend auf den in diesen verpackten Nachrichten zu bewerten, sondern bereits davor entweder anhand der Datenpakete selbst oder sogar auf der Ebene des Übertragungssignals. Hierzu wird eine vorbestimmte Bedingung eingeführt, anhand derer entschieden werden kann, ob bereits anhand des Übertragungssignal und/oder des Datenpaketes selbst erkannt werden kann, inwieweit die im Datenpaket verpackte Nachricht relevant ist und ob eine ausreichende Notwendigkeit (Relevanz) oder sogar eine ausreichende Möglichkeit (ausreichende freie Kanalkapazität) vorliegt das Datenpaket weiterzuleiten.

Ein derartiger Ansatz ist bereits aus der Objekterkennung mit einem Kamerasystem bekannt, auf dessen Grundlage ebenfalls teils verkehrssicherheitskritische Entscheidungen getroffen werden müssen. Die Datenmenge einer der Objekterkennung zugrundeliegenden Kamera ist so hoch, dass die unmittelbare Pixeldatenmenge aus der Kamera nicht direkt für alle notwendigen Objekterkennungen verwendet werden kann. So werden die notwendigen Informationen aus der Pixeldatenmenge in Zwischenstufen gesammelt und immer weiter verdichtet. So können in einer ersten Zwischenstufe beispielsweise aus der Pixeldatenmenge bestimmte Objekt- und Szeneninformationen gesammelt werden wie beispielsweise ob die Fahrspur links und/oder rechts vom Fahrzeug ist. Wird in einer Zwischenstufe jedoch eine falsche Entscheidung getroffen, so schlägt sich diese falsche Entscheidung in allen nachstehenden Zwischenstufen nieder und führt dazu, dass relevante Objekte oder Szenen möglicherweise nicht als solche erkannt werden. Über die Zeit ist jedoch die bestmögliche Erkennung aller relevanten Objekte sichergestellt, weil stets eine Abwägung zwischen Rechenaufwand und Erkennungsleistung durchgeführt wird.

Mit der Erkenntnis, dass die Pixel aus der Kamera wie die Datenpakete in dem Fahrzeug-Ad-hoc-Netzwerk für das Verarbeitungssystem im Fahrzeug eine Art Rohdaten darstellen, kann das Prinzip der Objekterkennung mit einem Kamerasystem auch auf die Informationsübermittlung mit dem Fahrzeug-Ad-hoc-Netzwerk übertragen werden, wobei die Auswahl der relevanten Nachrichten in bereits erläuterter Weise auf der Ebene des Übertragungssignals und/oder der Datenpakete durchgeführt wird. Zwar ist auf diese Weise nicht mehr sichergestellt, dass alle wichtigen Datenpakete auch weitergeleitet werden. Es ist jedoch davon auszugehen, dass Datenpakete mit relevanten Nachrichten, wie beispielsweise von einem Liegenbleiber auf der Straße, häufiger versendet werden. Durch die sich ständig ändernden Randbedingungen zwischen zwei versendeten Datenpaketen mit derselben Nachricht und vom selben Sender ist im statistischen Mittel davon auszugehen, dass die Datenpakete rechtzeitig das durch die vorbestimmte Bedingung definierte Filter passieren und so das gewünschte Ziel rechtzeitig erreichen. Wie bei der oben genannten Objekterkennung mit dem Kamerasystem wird damit im Rahmen der vorliegenden Erfindung vorgeschlagen zwischen Rechenaufwand und Erkennungsleistung abzuwägen. Dies wird mit der vorbestimmten Bedingung umgesetzt, die zweckmäßigerweise über die Zeit verändert wird, um zwischen dem Rechenaufwand und der Erkennungsleistung abzuwägen.

In einem Bespiel können die Datenpakete basierend auf dem die Datenpakete tragenden Übertragungssignal ausgefiltert werden. Hierzu kann die vorbestimmte Filterbedingung eine vorbestimmte Empfangsfeldstärke umfassen, mit der das das weiterzuleitende Datenpaket tragende Übertragungssignal empfangen werden muss. Anhand der Empfangsfeldstärke des Empfangssignals kann beispielsweise die Entfernung des Senders des weiterzuleitenden Datenpaketes abgeschätzt werden, denn je weiter der Sender des Datenpaketes entfernt ist, desto geringer ist die Empfangsfeldstärke. Allein aus diesem Kriterium heraus lassen sich schon sinnvolle Abschätzungen darüber treffen, ob das Datenpaket unabhängig von der Nachricht selbst weitergeleitet werden sollte oder nicht.

Eine erfindungsgemäße Möglichkeit, die Empfangsfeldstärke zum Filtern weiterzuleitender Datenpakete zu nutzen, ist das empfangene Datenpaket auszufiltern, wenn das das empfangene Datenpaket tragende Übertragungssignal eine Empfangsfeldstärke besitzt, die die vorbestimmte Empfangsfeldstärke überschreitet. Dieser Möglichkeit liegt die Überlegung zugrunde, dass ein sehr nah am Sender des weiterzuleitenden Datenpaketes befindlicher Weiterleitungssender die Reichweite des weiterzuleitenden Datenpaketes nicht spürbar erhöhen kann. Folglich sinkt auch die Wahrscheinlichkeit, dass das weiterzuleitende Datenpaket von einem Knoten des Fahrzeug-Ad-Hoc-Netzwerkes empfangen wird, der nicht auch vom ursprünglichen Sender des weiterzuleitenden Datenpaketes bereits erreicht wird. Daher ist eine Weiterleitung an dieser Stelle überflüssig und verschwendet unnötig Rechenressourcen.

In einer Weiterbildung des angegebenen Verfahrens ist die Empfangsfeldstärke von einer statistischen Bedingung abhängig, die basierend auf einer Anzahl von über einen vorbestimmten Zeitraum empfangenen Datenpaketen bestimmt wird. Anhand dieser Bestimmung kann beispielsweise die Verkehrssituation berücksichtigt werden, dass nur sehr wenige Knoten im unmittelbaren Kommunikationsbereich des das angegebene Verfahren ausführenden Knotens im Fahrzeug-Ad-Hoc-Netzwerk vorhanden sind und hier jede Chance genutzt werden sollte, dass jeder Knoten in diesem unmittelbaren Kommunikationsbereich alle relevanten Datenpakete erhält.

In einer besonderen Weiterbildung könnte die statistische Bedingung ein Quantil sein, für die über einen vorbestimmten Zeitraum empfangenen Datenpakete in dem Übertragungssignal sein. Das Quantil kann prinzipiell beliebig definiert werden. In besonders günstiger Weise wird es als Perzentil definiert, im Rahmen dessen beispielsweise die vorbestimmte Empfangsfeldstärke auf einen bestimmten Prozentsatz der am höchsten empfangenen Empfangsfeldstärken im Zeitraum festgelegt werden kann. Das Perzentil kann beispielsweise zwischen 50% und 99%, vorzugsweise zwischen 70% und 80% besonders bevorzugt bei 75% festgelegt sein.

In einer anderen erfindungsgemäßen zusätzlichen oder alternativen Möglichkeit des angegebenen Verfahrens enthält das Datenpaket eine Nachricht mit einer Priorität, wobei die vorbestimmte Bedingung eine vorbestimmte Priorität für die Priorität der Nachricht ist. Derartige Prioritäten sind beispielsweise im "Draft C2C-CC Basic System Standards Profile" als Datenverkehrsklassen (Traffic Classes) definiert. Mit einer niederprioreren Datenverkehrsklasse kann auch von einer abnehmenden Dienstgüte ausgegangen werden, obwohl eine bestimmte Dienstgüte nicht garantiert werden kann, weil die Kommunikation im Fahrzeug-Ad-Hoc-Netzwerk prinzipbedingt drahtlos erfolgt und den physikalischen Gegebenheiten der Wellenausbreitung unterliegt. Auf Basis der Datenverkehrsklasse kann zunächst überprüft werden, ob ein Weiterleiten eines weiterzuleitenden Datenpaketes erfolgreich wäre. Nur wenn dies mit einer bestimmten Wahrscheinlichkeit zutrifft, wird das weiterzuleitende Datenpaket auch tatsächlich weitergeleitet.

Zweckmäßigerweise wird für die bestimmte Wahrscheinlichkeit ein fester oder statistisch ermittelter Schwellwert gewählt, wie er bereits in der zuvor erläuterten Weise im Rahmen der vorbestimmten Empfangsfeldstärke bestimmt wurde. Zwar wären auch modellbasierte Methoden denkbar, hier müsste die Auswertung des Modells jedoch weniger Rechenressourcen in Anspruch nehmen, als in Anspruch genommen werden würde, wenn alle weiterzuleitenden Datenpakete ausgepackt und basierend auf der enthaltenden Nachricht bewertet werden würden, da das angegebene Verfahren dann technisch besonders sinnvoll ist.

Gemäß einem weiteren Aspekt der Erfindung ist eine Weiterleitungsvorrichtung eingerichtet, ein Weiterleitungsverfahren nach einem der vorstehenden Ansprüche durchzuführen, wobei die Weiterleitungsvorrichtung einen Speicher und einen Prozessor aufweist. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Beispielsweise umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Beispielsweise enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Transceiver für ein Fahrzeug zum Weiterleiten von in einem Übertragungssignal versendeten Datenpaketen in einem Fahrzeug-Ad-Hoc-Netzwerke:
- eine Antenne zum Empfangen des Übertragungssignals,
- eine Weiterleitungsvorrichtung nach Anspruch 4 zum Weiterleiten wenigstens eines Teils der Datenpakete aus dem Übertragungssignal.

In einem Beispiel umfasst ein Fahrzeug einen der angegebenen Transceiver.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines auf einer Straße fahrenden Fahrzeuges,
Fig. 2 eine Prinzipdarstellung des Fahrzeuges der Fig. 1,
Fig. 3 eine Prinzipdarstellung eines Fahrzeug-Ad-Hoc-Netzwerkes, an dem das Fahrzeug der Fig. 1 und 2 teilnehmen kann,
Fig. 4 eine Prinzipdarstellung eines Transceivers in dem Fahrzeug-Ad-Hoc-Netzwerk 1 der Fig. 3,
Fig. 5 eine Prinzipdarstellung von zu filternden Signalen, die aus dem Fahrzeug-Ad-Hoc-Netzwerk der Fig. 3 empfangen wurden,
Fig. 6 eine Prinzipdarstellung von gefilterten Signalen, die aus dem Fahrzeug-Ad-Hoc-Netzwerk der Fig. 3 empfangen wurden,
Fig. 7a und 7b eine Prinzipdarstellung von Datenpaketen, die aus einem über das Fahrzeug-Ad-Hoc-Netzwerk der Fig. 3 empfangenen Signal gefiltert wurden, und
Fig. 8a und 8b eine Prinzipdarstellung eines Übertragungssignals in dem Car2X-Netzwerk 1 der Fig. 3 in zwei verschiedenen Kanalauslastungszuständen zeigen.

In den Figuren werden gleiche technische Elemente mit gleichen Bezugszeichen versehen und nur einmal beschrieben.

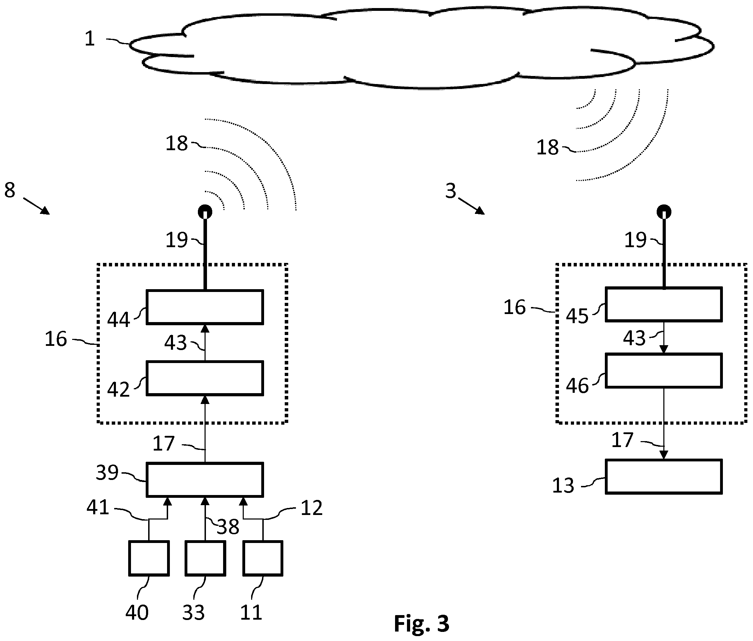

Die Erfindung betrifft ein Netzwerkprotokoll für ein in Fig. 3 gezeigtes Fahrzeug-Ad-Hoc-Netzwerk, das nachstehend der Einfachheit halber Car2X-Netzwerk 1 genannt wird. Zur besseren Verständlichkeit des technischen Hintergrundes zu diesem Car2X-Netzwerk 1 soll zunächst ein nicht einschränkendes Anwendungsbeispiel zu diesem Car2X-Netzwerk 1 gegeben werden, bevor auf technische Einzelheiten zu diesem näher eingegangen wird.

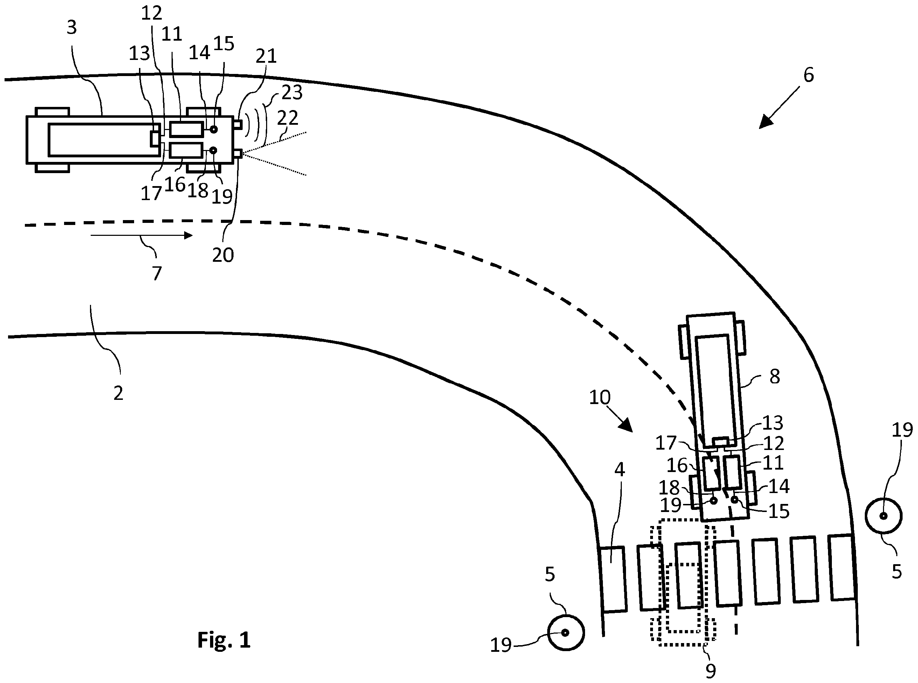

Es wird daher auf Fig. 1 Bezug genommen, die eine Prinzipdarstellung eines auf einer Straße 2 fahrenden Fahrzeuges 3 zeigt.

In der vorliegenden Ausführung soll sich auf der Straße 2 eine Fußgängerüberführung 4 befinden, an der mittels einer Ampel 5 geregelt wird, ob das Fahrzeug 3 auf der Straße 2 die Fußgängerüberführung 4 überqueren darf oder ein nicht weiter dargestellter Fußgänger auf der Fußgängerüberführung 4 die Straße 2. Zwischen der Fußgängerüberführung 4 und der Ampel 5 befindet sich im Rahmen der vorliegenden Ausführung ein Hindernis in Form einer Kurve 9, die die Fußgängerüberführung 4 dem Fahrer des Fahrzeuges 3 sowie einer noch zu beschreibenden Umfeldsensorik des Fahrzeuges 3 gegenüber verdeckt.

In einer Fahrtrichtung 7 vor dem Fahrzeug 3 ist in Fig. 1 ein weiteres Fahrzeug 8 dargestellt, das mit einem gepunktet dargestellten Fahrzeug 9 auf der Fußgängerüberführung 4 in einen Verkehrsunfall 10 verwickelt ist und die Fahrspur in Fahrtrichtung 7 des Fahrzeuges 3 blockiert.

Die Fußgängerüberführung 4 und der Verkehrsunfall 10 stellen Gefahrensituationen auf der Straße 2 dar. Übersieht der Fahrer des Fahrzeuges 3 die Fußgängerüberführung 4 und hält vor dieser damit regelwidrig nicht an, so könnte er einen die Fußgängerüberführung 4 überquerenden Fußgänger erfassen, der beim Überqueren der Fußgängerüberführung 4 auf das regelkonforme Verhalten des Fahrers des Fahrzeuges 3 vertraut. In beiden Gefahrensituationen muss der Fahrer des Fahrzeuges 3 das Fahrzeug 3 anhalten, um eine Kollision mit dem Gefahrenobjekt in der Gefahrensituation, also dem Fußgänger und/oder dem weiteren Fahrzeug 8 zu vermeiden. Hierzu kann das Car2X-Netzwerk 1 verwendet werden, worauf an späterer Stelle näher eingegangen wird.

Das Fahrzeug 3 weist in der vorliegenden Ausführung einen Empfänger 11 für ein globales Satellitennavigationssystem, nachstehend GNSS-Empfänger 11 genannt auf, über den das Fahrzeug 3 in einer an sich bekannten Weise Positionsdaten in Form seiner absoluten geographischen Lage 12 bestimmen und beispielsweise im Rahmen eines Navigationssystems 13 nutzen kann, um diese auf einer nicht weiter dargestellten geographischen Karten anzuzeigen. Entsprechende Signale 14 des Globalen Satellitennavigationssystems, nachstehend GNSS-Signale 14 genannt, können beispielsweise über eine entsprechende GNSS-Antenne 15 empfangen und in an sich bekannter Weise an den GNSS-Empfänger 11 weitergeleitet werden.

Das Fahrzeug weist in der vorliegenden Ausführung ferner einen Transceiver 16 auf, über den das Fahrzeug 3 als Knoten am Car2X-Netzwerk 1 teilnehmen und mit anderen Knoten, wie beispielsweise dem weiteren Fahrzeug 8 und/oder der Ampel 5 nachstehend Car2X-Nachrichten 17 genannte Nachrichten austauschen kann. Dieser Transceiver 16 soll zur Abgrenzung gegenüber dem GNSS-Empfänger 11 nachstehend Car2X-Transceiver 16 genannt werden.

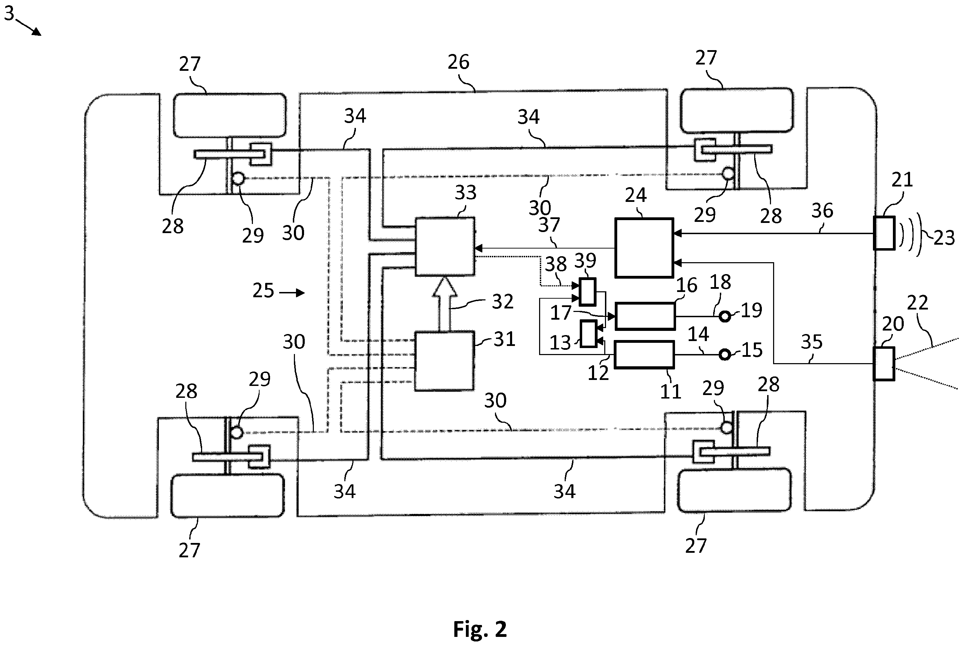

In den über das Car2X-Netzwerk 1 ausgetauschten Car2X-Nachrichten 17, können die einzelnen Knoten 3, 5, 8 untereinander verschiedene Informationen beschreibende Daten austauschen mit denen beispielsweise die Verkehrssicherheit auf der Straße 2 erhöht werden kann. Ein Beispiel für die Informationen, die mit den Daten in den Car2X-Nachrichten 17 ausgetauscht werden können, wäre die über den GNSS-Empfänger 11 bestimmte absolute geographische Lage 12 des jeweiligen Knotens 3, 5, 8 des Car2X-Netzwerkes 1. Derartige Daten können auch als Positionsdaten bezeichnet werden. Ist der die geographische Lage 12 empfangende Knoten 3, 5, 8 des Car2X-Netzwerkes 1 ein Fahrzeug, wie beispielsweise das nicht am Verkehrsunfall 10 beteiligte Fahrzeug 3 und das am Verkehrsunfall 10 beteiligte Fahrzeug 8 dann kann die über das Car2X-Netzwerk 1 empfangene geographische Lage 12 beispielsweise auf dem Navigationssystem 13 des empfangenden Fahrzeuges 3, 8 zur Darstellung beispielsweise der Verkehrsbewegung verwendet werden. Wird neben der absoluten geographischen Lage 12 auch der Verkehrsunfall 10 als Information mit den Daten in der Car2X-Nachricht 17 beschrieben, so können bestimmte Verkehrssituationen, wie beispielsweise der Verkehrsunfall 10 auf Navigationssystem 13 konkreter dargestellt werden. Auf weitere mögliche mit den Car2X-Nachrichten 17 austauschbare Informationen wird später im Rahmen der Fig. 2 näher eingegangen.

Zum Austausch der Car2X-Nachrichten 17 moduliert der Car2X-Transceiver 16 entweder eine Car2X-Nachricht 17 auf ein nachstehend Car2X-Signal 18 genanntes Übertragungssignal und versendet es über eine nachstehend Car2X-Antenne 19 genannte Antenne an die anderen Knoten 3, 5, 8 im Car2X-Netzwerk 1 oder er empfängt über die Car2X-Antenne 19 ein Car2X-Signal 18 und filtert aus diesem die entsprechende Car2X-Nachricht 17 heraus. Darauf wird an späterer Stelle im Rahmen der Fig. 3 näher eingegangen. In Fig. 1 ist dabei dargestellt, dass der Car2X-Transciever 16 eine Car2X-Nachricht 17 an das Navigationssystem 13 unter der Annahme ausgibt, dass diese in der oben beschriebenen Weise Informationen enthält, die auf diesem darstellbar sind. Das ist jedoch nicht einschränkend zu verstehen. Insbesondere kann zweckmäßigerweise auch der GNSS-Empfänger 11 direkt oder, wie in Fig. 2 gezeigt, indirekt mit dem Car2X-Transceiver 16 verbunden sein, um die eigene absolute geographische Lage 12 im Car2X-Netzwerk 1 zu versenden.

Die Struktur der Car2X-Nachricht 17 sowie des Car2X-Signals 18 und damit der Aufbau des Car2X-Netzwerkes können in einem Kommunikationsprotokoll definiert werden. Es gibt bereits derartige Kommunikationsprotokolle länderspezifisch unter anderem im Rahmen der ETSI TC ITS bei ETSI in Europa und im Rahmen der IEEE 1609 bei IEEE sowie bei SAE in den Vereinigten Staaten von Amerika. Weitere Informationen hierzu lassen sich in den genannten Spezifikationen finden.

Das Fahrzeug 3 kann optional noch die oben genannte Umfeldsensorik in Form einer Kamera 20 und eines Radarsensors 21 aufweisen. Mit der Kamera 20 kann das Fahrzeug 3 innerhalb eines Bildwinkels 22 ein Bild einer Ansicht aufnehmen, die in Fahrtrichtung 7 des Fahrzeuges 3 betrachtet vor dem Fahrzeug 3 liegt. Zudem kann das Fahrzeug 3 mit dem Radarsensor 21 und entsprechenden Radarstrahlen 23 in Fahrtrichtung 7 des Fahrzeuges 3 betrachtet Objekte erkennen und in einer an sich bekannten Weise den Abstand zum Fahrzeug 3 bestimmen.

Um die mit einer Car2X-Nachricht 17 übertragbaren Informationen zu konkretisieren, soll nachstehend zunächst auf den Aufbau des Fahrzeuges 3 und des weiteren Fahrzeuges 5 beispielhaft anhand des Fahrzeuges 3 eingegangen werden. Das Fahrzeug 3 besitzt verschiedene Sicherheitskomponenten von denen in Fig. 2 ein elektronischer Bremsassistent 24, EBA 24 genannt, und eine an sich bekannte Fahrdynamikregelung 25 gezeigt ist. Während der DE 10 2004 030 994 A1 Details zum EBA 24 entnommen werden können, können der DE 10 2011 080 789 A1 Details zur Fahrdynamikregelung 25 entnommen werden.

Das Fahrzeug 3 umfasst ein Chassis 26 und vier Räder 27. Jedes Rad 27 kann über eine ortsfest am Chassis 26 befestigte Bremse 28 gegenüber dem Chassis 26 verlangsamt werden, um eine Bewegung des Fahrzeuges 3 auf der Straße 2 zu verlangsamen.

Dabei kann es in einer dem Fachmann bekannten Weise passieren, dass das die Räder 27 des Fahrzeugs 3 ihre Bodenhaftung verlieren und sich das Fahrzeug 3 sogar von einer beispielsweise über ein nicht weiter gezeigtes Lenkrad vorgegebenen Trajektorie durch Untersteuern oder Übersteuern wegbewegt. Dies wird durch die Fahrdynamikregelung 25 vermieden.

In der vorliegenden Ausführung weist das Fahrzeug 4 dafür Drehzahlsensoren 29 an den Rädern 27 auf, die eine Drehzahl 30 der Räder 27 erfassen.

Basierend auf den erfassten Drehzahlen 30 kann ein Regler 31 in einer dem Fachmann bekannten Weise bestimmen, ob das Fahrzeug 3 auf der Fahrbahn rutscht oder sogar von der oben genannten vorgegebenen Trajektorie abweicht und entsprechend mit einem an sich bekannten Reglerausgangssignal 32 darauf reagieren. Das Reglerausgangssignal 32 kann dann von einer Stelleinrichtung 33 verwendet werden, um mittels Stellsignalen 34 Stellglieder, wie die Bremsen 28 anzusteuern, die auf das Rutschen und die Abweichung von der vorgegebenen Trajektorie in an sich bekannter Weise reagieren.

Der EBA 24 kann über die Kamera 20 erfasste Bilddaten 35 und über den Radarsensor 21 erfasste Abstandsdaten 36 zu Objekten wie Fahrzeugen in Fahrtrichtung 7 vor dem Fahrzeug 3 auswerten und basierend darauf eine Gefahrensituation erfassen. Diese könnte beispielsweise gegeben sein, wenn sich ein Objekt vor dem Fahrzeug 3 diesem mit einer zu hohen Geschwindigkeit nähert. In einem solchen Fall könnte der EBA 24 über ein Notbremssignal 37 die Stelleinrichtung 33 einweisen, über die Stellsignale 34 eine Notbremsung mit den Bremsen 28 auszuführen.

Jedes Mal, wenn der EBA 24 oder die Fahrdynamikregelung 25 über die Stelleinrichtung 33 in das Fahrzeug 4 eingreifen, kann beispielsweise die Stelleinrichtung 33 ein in Fig. 2 gepunktet dargestelltes Berichtssignal 38 ausgeben. Zweckmäßigerweise sollte das Berichtssignal 38 konkretisieren, ob der Eingriff durch den EBA 24 oder die Fahrdynamikregelung 25 bedingt war. Ein derartiges Berichtssignal 38 kann von einer beliebigen Instanz im Fahrzeug 3, also beispielsweise auch vom Regler 31 der Fahrdynamikregelung 25 erzeugt werden. Eine Nachrichtenerzeugungseinrichtung 39 könnte dann basierend auf dem Berichtssignal 38, der absoluten geographischen Lage 12 und einem in Fig.3 gezeigten aus einem Zeitgeber 40 ausgegebenen Zeitstempel 41 eine Car2X-Nachricht 17 erzeugen, mit der der Eingriff des EBAs 24 und/oder der Fahrdynamikregelung 25 als Information über das Car2X-Netzwerk 1 den anderen Knoten 5, 8 berichtet werden kann. Die so erzeugte Car2X-Nachricht 17 könnte dann über die Car2X-Antenne 19 im Car2X-Netzwerk 1 versendet werden.

In dem Beispiel der Fig. 1 wurde ausgeführt, dass die in den Car2X-Nachrichten 17 ausgetauschten Information über die absolute geographische Lage 12 der einzelnen Knoten 3, 5, 8 und/oder über Ereignisse wie der Verkehrsunfall 10 und/oder wie ein Eingriff des EBAs 24 und/oder der Fahrdynamikregelung 25 auf dem Navigationssystem 13 zur Orientierung des Fahrers dargestellt werden könnten. Alternativ oder zusätzlich können basierend auf den in den Car2X-Nachrichten 17 ausgetauschten Informationen aber auch aktiv Stellsignale 34 beispielsweise mit der Stelleinrichtung 33 generiert werden. Wird beispielsweise der Eingriff des EBA 24 als Information in einer Car2X-Nachricht 17 übermittelt, könnte beispielsweise basierend auf dem Empfang dieser Car2X-Nachricht 17 automatisch der EBA 24 in dem empfangenden Fahrzeug 3, 8 ausgelöst werden.

Nachstehend soll anhand der Fig. 3 die Übertragung einer Car2X-Nachricht 17 über das Car2X-Netzwerk 1 erläutert werden, das in Fig. 3 der Übersichtlichkeit halber mit einer Wolke angedeutet ist. Als Inhalt der Car2X-Nachricht 17 soll beispielsweise ein durch die Stelleinrichtung 33 mit dem Berichtssignal 38 berichteter Eingriff durch den EBA 24 in das am Verkehrsunfall 10 beteiligte Unfall-Fahrzeug 8 angenommen werden.

Wie bereits erläutert erzeugt die Nachrichtenerzeugungseinrichtung 39 basierend auf dem Berichtssignal 38, der absoluten geographischen Lage 12 und dem Zeitstempel 41 die Car2X-Nachricht 17 gemäß dem oben erwähnten Kommunikationsprotokoll. Die Nachrichtenerzeugungseinrichtung 39 kann dabei prinzipiell auch Teil des Car2X-Transceivers 16 sein.

Aus der Car2X-Nachricht 17 werden in dem Car2X-Transceiver 16 des Unfall-Fahrzeuges 8 in einer Datenpaketerzeugungseinrichtung 42 Datenpaketen 43 erzeugt. Durch das Erzeugen von Datenpaketen 43 können Car2X-Nachrichten 17 aus verschiedenen Anwendungen in dem Unfall-Fahrzeug 8 zu einem einzigen Datenstrom zusammengefasst werden, um das Car2X-Signal 18 zu erzeugen. Die Datenpaketerzeugungseinrichtung 42 basiert auf einer Netzwerk- und Transportschicht (eng. network and transport layer), deren Aufgabe es bekanntlich ist die Netzwerkdaten aus verschiedenen Anwendungen zu routen. Im Falle der Weiterleitung eines empfangenen Datenpaketes 43 an weitere Teilnehmer 3, 5, 8 im Car2X-Netzwerk 1 stellen die Nachrichtenerzeugungseinrichtung 39 und die Datenpaketerzeugungseinrichtung 42 gemeinsam die Netzwerk- und Transportschicht dar, die aber im Wesentlichen von der oben genannten Spezifikation des Kommunikationsprotokolls für das Car2X-Netzwerk 1 abhängig ist.

Die generierten Datenpakete 43 werden in einer Modulationseinrichtung 44 auf das Car2X-Signal 18 aufmoduliert und im Car2X-Netzwerk 1 drahtlos versendet. Die Modulationseinrichtung 44 entspricht daher einer Schnittstellenschicht, deren Aufgabe es ist, das Unfall-Fahrzeug 8 physikalisch an das Car2X-Netzwerk 1 anzubinden. Auch der Aufbau der Modulationseinrichtung 44 ist von der oben genannten Spezifikation des Kommunikationsprotokolls für das Car2X-Netzwerk 1 abhängig.

Auf Seiten des nicht am Verkehrsunfall 10 beteiligten Fahrzeuges 3 kann das vom Unfall-Fahrzeug 8 versendete Car2X-Signal 18 dann über die Car2X-Antenne 19 empfangen werden.

Um die Car2X-Nachricht 17 aus dem Car2X-Signal 18 zu extrahieren weist der Car2X-Transceiver 16 des Fahrzeuges 3 eine Demodulationseinrichtung 45 auf, die die senderseitige Modulation der Datenpakete 43 in an sich bekannter Weise rückgängig macht. Entsprechend kann eine Nachrichtenextraktionseinrichtung 46 die Car2X-Nachrichten 17 aus den Datenpaketen 43 extrahieren und den Anwendungen im Fahrzeug 3, wie dem Navigationssystem 13 oder auch der Stelleinrichtung 33 zur Verfügung stellen. Letztendlich stellen die Demodulationseinrichtung 45 und die Nachrichtenextraktionseinrichtung 46 die empfangsseitigen Gegenstücke entsprechend der oben genannten Netzwerk und Transportschicht und der Schnittstellenschicht dar und sind ebenfalls von der oben genannten Spezifikation des Kommunikationsprotokolls für das Car2X-Netzwerk 1 abhängig.

Zu Details der einzelnen Netzwerkschichten wird daher auf die einschlägigen Spezifikationen verwiesen.

Insbesondere in Hochlastsituationen, wenn sich auf der Straße 2 eine Vielzahl von Knoten 3, 5, 8 im Car2X-Netzwerk 1 befinden, müssen in den jeweiligen Knoten 3, 5, 8 zur Verarbeitung aller im Car2X-Netzwerk 1 versendeten Car2X-Nachrichten 17 entsprechend hohe Rechenressourcen freigehalten werden, um empfängerseitig die Verarbeitung aller Car2X-Nachrichten 17 innerhalb bestimmter Zeitschranken zu garantieren. Die Bereitstellung dieser hohen Rechenressourcen ist mit einem entsprechend hohen Kostenaufwand verbunden, der im Rahmen der vorliegenden Ausführung durch die Einführung von Vorfiltern 47, 48 reduziert werden soll.

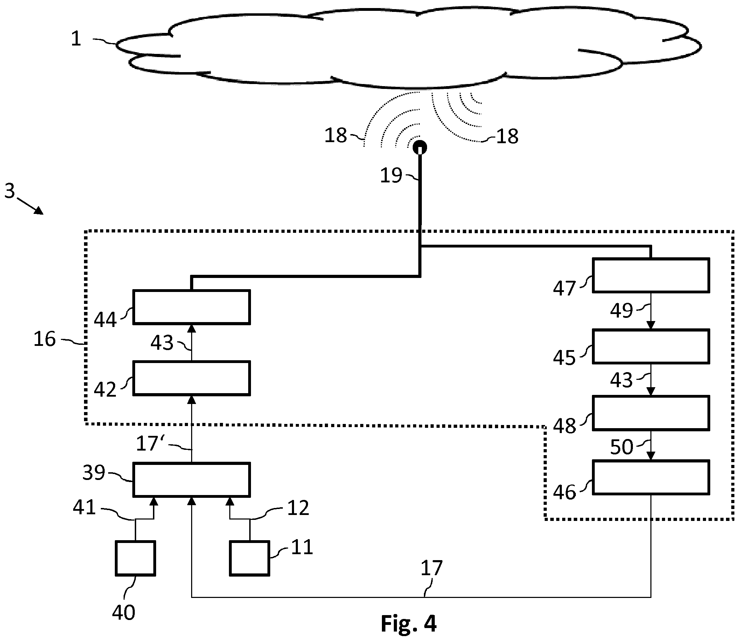

Ein besonderer Fall, in dem in Hochlastsituationen besonders viel Rechenressourcen notwendig werden, soll nachstehend kurz an Fig. 4 verdeutlicht werden, in der die Datenpaketerzeugungseinrichtung 42, die Modulationseinrichtung 44, die Demodulationseinrichtung 45 und die Nachrichtenextraktionseinrichtung 46 im nicht am Unfall 10 beteiligten Fahrzeug 3 in einem gemeinsamen Car2X-Transceiver 16 dargestellt sind, wie es der Normalfall sein wird.

Empfängt das nicht am Verkehrsunfall 10 beteiligte Fahrzeug 3 eine Car2X-Nachricht 17, die über diesen Verkehrsunfall 10 informiert, dann kann das nicht am Verkehrsunfall 10 beteiligte Fahrzeug 3 diese Car2X-Nachricht 17 mit einem eigenen Zeitstempel 41 und seiner geographischen Lage 12 versehen und als weiterzuleitende Car2X-Nachricht 17' an andere Knoten 5, 8 im Car2X-Netzwerk 1 weiterleiten. Die Entscheidung über die Weiterleitung kann beispielsweise in der Nachrichtenerzeugungseinrichtung 39 basierend auf bestimmten Kriterien getroffen werden, die nachstehend nicht weiter von Interesse sein sollen.

Was aber deutlich werden soll ist, dass die Entscheidung, ob eine in einem Car2X-Signal 18 empfangene und in einem Datenpaket 43 verpackte Car2X-Nachricht 17 weitergeleitet werden soll, grundsätzlich basierend auf der Information der Car2X-Nachricht 17 getroffen wird, weshalb im Rahmen dieses Schemas jede Car2X-Nachricht 17 aus dem Car2X-Signal 18 extrahiert werden müsste. Hier greift die vorliegende Ausführung mit einem ersten Vorfilter 47 und einem zweiten Vorfilter 48 an.

Während das erste Vorfilter 47 ein gefiltertes Car2X-Signal 49 ausgibt, in dem ein Teil der Datenpakete 43 und damit ein Teil der Car2X-Nachrichten 17 herausgefiltert sein können, ohne dass diese je entpackt werden, gibt das zweite Vorfilter 48 gefilterte Datenpakete 50 aus, aus denen ebenfalls ein Teil der ursprünglich in dem Car2X-Signal 18 versendeten Datenpakete 43 herausgefiltert sein können, ohne dass die darin gepackten Car2X-Nachrichten 17 je entpackt werden.

Die Idee hinter den Vorfiltern 47, 48 ist, für eine Weiterleitung potentiell irrelevante Car2X-Nachrichten 17 möglichst frühzeitig auszusortieren, um zu vermeiden, dass diese durch ein Element in der Weiterleitungskette unnötigerweise verarbeitet werden müssen, weil sie entweder für den Empfangsknoten der weitergeleiteten Nachricht 17' irrelevante Informationen und/oder redundante Informationen enthalten. Auf diese Weise kann der Rechenaufwand für die grundsätzlich in der Nachrichtenerzeugungseinrichtung 39 notwendige Entscheidung über eine Weiterleitung einer Car2X-Nachricht 17 deutlich reduziert werden.

Während der erste Vorfilter 47 dabei das Car2X-Signal 18 ohne Kenntnis der eigentlichen Car2X-Nachricht 17 filtern könnte, könnte der zweite Vorfilter 48 die Datenpakete 43 ohne Kenntnis der eigentlichen Car2X-Nachricht 17 filtern. Zwar wird dadurch nicht mehr sichergestellt, dass von den im Fahrzeug-Ad-Hoc-Netzwerk 1 versendeten Car2X-Nachrichten 17 auch alle sicherheitskritischen Car2X-Nachrichten 17, wie beispielsweise eine Meldung über einen Eingriff des EBA 24 auch tatsächlich an allen Zielknoten 5, 8 im Car2X-Netzwerk 1 ankommen. In der Regel aber werden derart sicherheitskritische Car2X-Nachrichten 17 nicht nur einmal versendet, so dass im statistischen Mittel davon auszugehen ist, dass derart sicherheitskritische Car2X-Nachrichten 17 in einem vertretbaren Zeitrahmen die Vorfilter 47, 48 in wenigstens einem Weiterleitungsknoten im Car2X-Netzwerk 1 passieren. Um diesen vertretbaren Zeitrahmen zu klein wie möglich zu halten, können Vorfilter 47, 48 so ausgelegt werden, dass sicherheitskritische Daten mit überdurchschnittlicher Wahrscheinlichkeit die Vorfilter 47, 48 passieren.

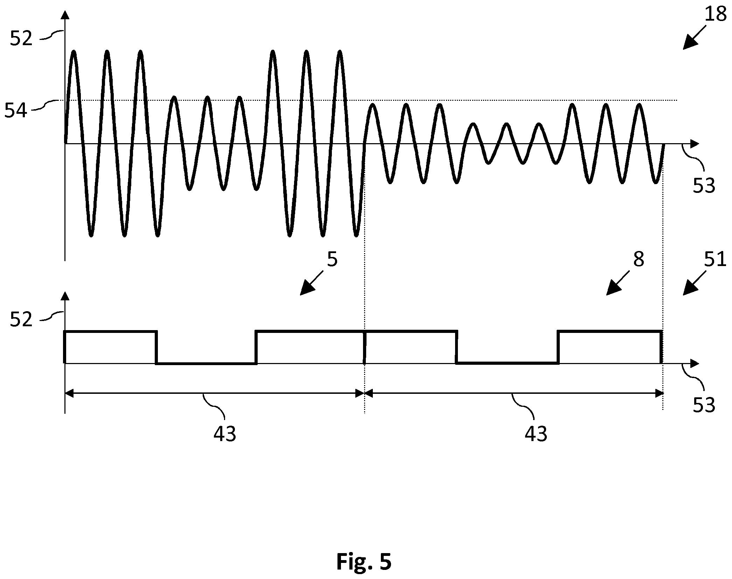

Für eine möglichst effiziente Vorfilterung in den Vorfiltern 47, 48 wird eine vorbestimmte Filterbedingung eingeführt, nach der das Car2X-Signal 18 im ersten Vorfilter 47 und/oder die Datenpakete 43 im zweiten Vorfilter 48 vorgefiltert werden. Diese vorbestimmte Filterbedingung wird für das erste Vorfilter 47 nachstehend anhand von Fig. 4 und 5 erläutert, die ein Beispiel für das Car2X-Signal 18 und ein die zum Car2X-Signal 18 gehörenden Datenpakete 43 tragendes Signal 51 in je einem Signalstärke 52 - Zeit 53 - Diagramm zeigen.

Das Car2X-Signal 18 kann ein beliebiges Trägersignal sein, auf das die Datenpakete 43 in beliebiger Weise aufmoduliert sind. Da das Car2X-Signal 18 die Datenpakete 43 aller am Car2X-Netzwerk 1 beteiligten Knoten 3, 5, 8 überträgt, können neben den Datenpaketen 43 des Unfall-Fahrzeugs 8 mit denen der Verkehrsunfall 10 berichtet wird, im Car2X-Signal 18 auch Datenpakete 43 von Knoten 3, 5, 8 getragen sein, die sich näher am nicht am Unfall 10 beteiligten Fahrzeug 3 befinden können. Im Folgenden soll angenommen werden, dass sich eine der Ampeln 5 näher am nicht am Unfall 10 beteiligten Fahrzeug 3 befinden, als das Unfallfahrzeug 8, auch wenn in Fig. 1 ein anderes Szenario gezeigt ist. Wie aus Fig. 5 zu sehen, lässt sich ein derartiger, gegenüber dem Unfallfahrzeug 8 näher am Fahrzeug 3 befindlicher Knoten 5 dadurch erkennen, dass seine Datenpakete 43 mit einer Signalstärke 52 übertragen werden, die deutlich größer ist, als die Signalstärke 52 der Datenpakete 43 des Unfallfahrzeuges 8.

An dieser Stelle kann mit dem ersten Vorfilter 47 angegriffen werden und aus dem Car2X-Signal 18 nur die Datenpakete 43 herausfiltern, deren Signalstärke 52 eine gewisse Maximalsignalstärke 54 unterschreitet. Hierzu kann das erste Vorfilter 47 beispielsweise das Car2X-Signal 18 derart vorfiltern, dass in dem vorgefilterten Car2X-Signal 49 die Datenpakete 43 des näher am nicht am Unfall 10 beteiligten Fahrzeuges 3 befindlichen Knotens 5 herausgefiltert werden, so dass diese überhaupt nicht die Nachrichtenerzeugungseinrichtung 39 erreichen und damit auch nicht in die Entscheidung über eine Weiterleitung mehr eingebunden werden können. Die Überlegung dahinter ist, dass das nicht am Unfall 10 beteiligten Fahrzeug 3 als Weiterleitungsknoten 3 für in der Nähe befindliche Nachrichtenquellen für Car2X-Nachrichten 17 keine wirksame Reichweitenwirkung erzielen kann, so dass die meisten Knoten im Car2X-Netzwerk 1, die weitergeleitete Car2X-Nachricht 17' redundant erhalten werden und diese dann auch unnötig entpacken müssten. Daher sollten nur Car2X-Nachrichten 17 und damit Datenpakete 43 von Nachrichtenquellen weitergeleitet werden, die vom Weiterleitungsknoten 3 einen vorbestimmten Abstand besitzen was sich am einfachsten anhand der Empfangsfeldfeldstärke oder an der Signalstärke 52 des Car2X-Signals 18 beim Empfang erkennen lässt.

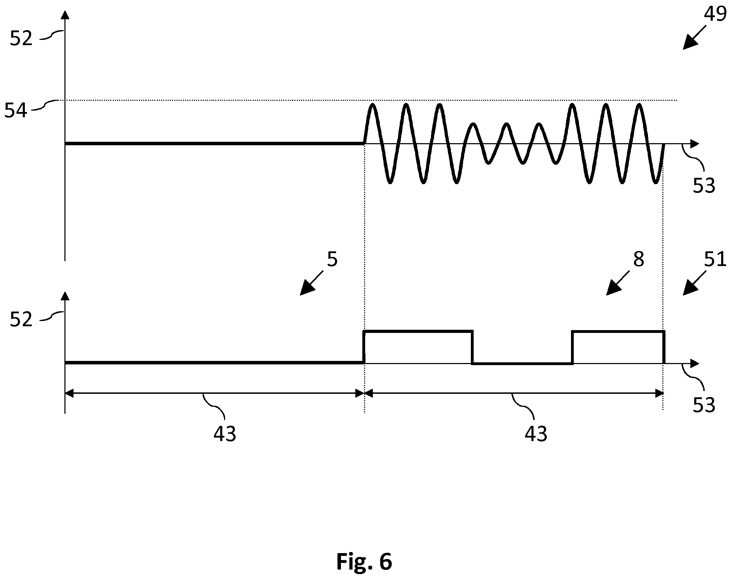

Im zweiten Vorfilter 48 könnten dann die aus dem vorgefilterten Car2X-Signal 49 gefilterten Datenpakete 43 noch einmal in nicht gezeigter Weise basierend auf einer weiteren Maximalsignalstärke nachgefiltert werden, wobei das zweite Vorfilter dann die Signalstärke 52 des Car2X-Signals 18 zu jedem Datenpaket 43 kennen müsste. Dabei könnte die Maximalsignalstärke 54 der Fig. 5 und 6 so gewählt werden, dass die Anzahl der sich aus dem gefilterten Car2X-Signals 49 ergebenden Datenpakete 43 immer noch höher als ein gewünschter Durchsatz an Datenpaketen 43 ist, der beispielsweise von den verfügbaren Rechenressourcen verarbeitet werden kann. Erst mit der weiteren Maximalsignalstärke im zweiten Vorfilter 48 könnte die Anzahl der gefilterten Datenpakete 50 an den gewünschten Durchsatz angepasst werden, so dass beispielsweise die notwendige Rechenleistung an die verfügbare Rechenleistung angepasst ist. Hierbei könnten dann auch die Datenpakete 43 des Unfall-Fahrzeuges 8 herausgefiltert werden, wenn dies beispielsweise zu nah am Fahrzeug 3 befindet. Zweckmäßigerweise sollte die Maximalsignalstärke 54 größer gewählt werden, als die weitere Maximalsignalstärke, da sonst der zweite Vorfilter 48 wirkungslos wäre.

Das Filtern des Car2X-Signals 18 und/oder der Datenpakete 43 basierend auf den Maximalsignalstärken 54, 55 hat den Effekt, dass Knoten 5, 8 im Car2X-Netzwerk 1 die sich zu nah einem potentiellen Weiterleitungsknoten befinden, bei der Weiterleitung ausgesendeter Car2X-Nachrichten 17 ignoriert werden, weil durch die Weiterleitung keine signifikante Reichweitenerhöhung erreicht werden kann. Die Maximalsignalstärken können dabei in Abhängigkeit des gewünschten Durchsatzes für die empfangenen Datenpakete 43 gewählt werden. Das heißt in dem zuvor genannten Beispiel, dass die Maximalsignalstärken bei wenig Datenverkehr im Car2X-Netzwerk entsprechend hoch gewählt werden können und umgekehrt.

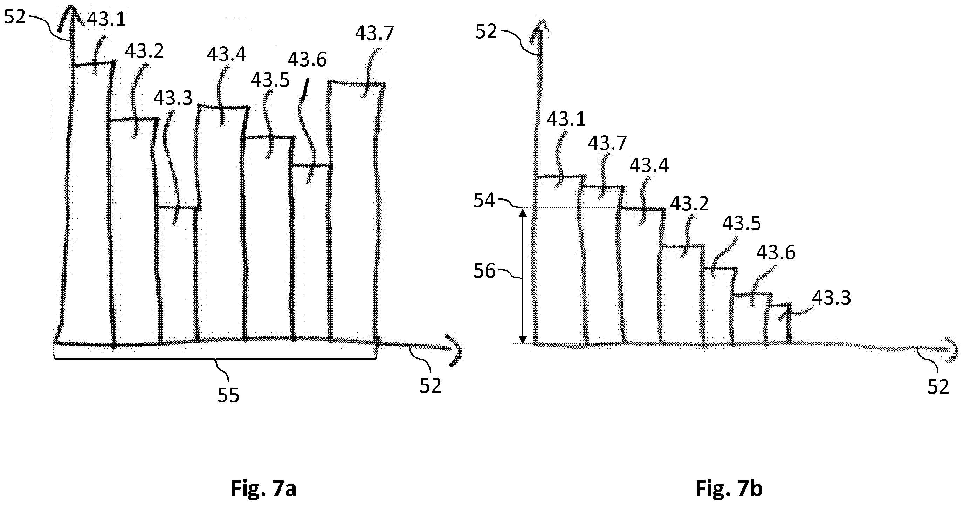

Eine derartige variable Einstellung der Maximalfeldstärken soll nachstehend unter Bezugnahme auf die Fig. 7a und 7b anhand der Maximalfeldstärke 54 näher erläutert werden.

Grundsätzlich kann die Maximalfeldstärke 54 basierend auf einer statistischen Bedingung eingestellt werden. Diese kann über einen vorbestimmten Zeitraum 55 definiert werden, in dem eine bestimmte Anzahl an empfangenen Datenpaketen 41.1 bis 43.7 betrachtet wird. Selbstverständlich könnten zur Definition der statistischen Bedingung auch die gefilterten Datenpakete 49 nach dem ersten Vorfilter 47 betrachtet werden.

Die statistische Bedingung für die Maximalfeldstärke 54 kann nun in Form eines statistischen Quantils definiert werden, im Rahmen dessen die Maximalfeldstärke 54 so gewählt wird, dass von den betrachteten Datenpaketen 41.1 bis 43.7 nach der entsprechenden Vorfilterung 47, 48 nur ein bestimmter Unterschreitungsanteil an diesen betrachteten Datenpaketen 41.1 bis 43. 7 Berücksichtigung findet. Dazu kann das Quantil beispielsweise als Perzentil 56 definiert werden, im Rahmen dessen beispielsweise nur ein bestimmter Prozentsatz an Datenpaketen 41.1 bis 43.7 mit den niedrigsten Signalstärken 52 nach der Vorfilterung 47, 48 weiterverwendet wird. Zur Verdeutlichung dieser Herangehensweise sind die im vorbestimmten Zeitraum 55 betrachteten Datenpakete 41.1 bis 43.7 in Fig. 7a in Empfangsreihenfolge und in Fig. 7b sortiert nach ihren Signalstärken 52, mit denen das Car2X-Signal 18 empfangen wurde, dargestellt.

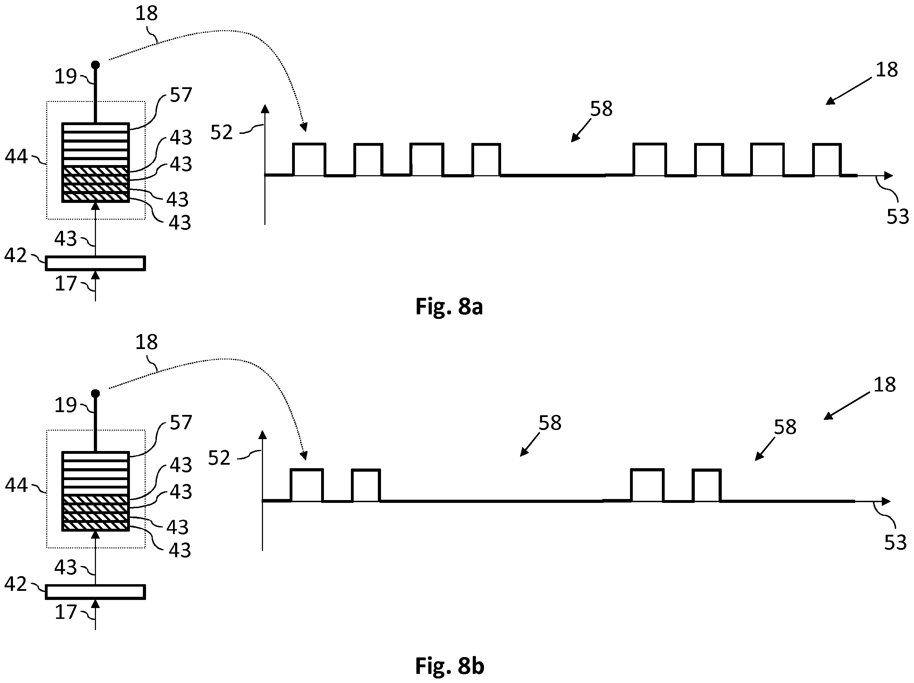

Alternativ oder zusätzlich können die einzelnen Datenpakete 43 im zweiten Vorfilter 48 auch basierend auf ihrer Priorität gefiltert und aussortiert werden. Diese Vorfilterung soll nachstehend anhand der Fig. 8a und 8b näher verdeutlicht werden, in denen die Kanallast des Car2X-Netzwerkes 1 anhand eines beispielhaften Car2X-Signals 18, wie es mit der Car2X-Antenne 19 abgegriffen werden kann, in zwei verschiedenen Zuständen des Car2X-Netzwerkes 1 dargestellt ist.

Hierzu ist zunächst zu erwähnen, dass Car2X-Nachrichten 17 senderseitig grundsätzlich nach dem FIFO genannten *"first in first* out"-Prinzip verpackt und versendet werden sollten. Hierzu können beispielsweise Warteschlangen 57 verwendet werden, in denen die Datenpaketerzeugungseinrichtung 42 die aus den Car2X-Nachrichten 17 erzeugten Datenpakete 43 hinterlegt und die Modulationseinrichtung 44 die Datenpakete 43 entsprechend ihrer Reihenfolge, in der sie in die Warteschlange 57 eingelegt sind, auf das Car2X-Signal 18 aufmoduliert.

Gibt es, wie in Fig. 8a gezeigt, nur wenige freie Sendeplätze 58 im Car2X-Signal 18, dann dauert es entsprechend lange, bis die Datenpakete 43 in der Warteschlange 57 abgearbeitet und versendet sind. Entsprechend schneller geht es, wenn es, wie in Fig. 8b gezeigt, entsprechend mehr freie Sendeplätze 58 gibt. Je höher die Kanallast im Car2X-Netzwerk 1 ist, desto weniger freie Sendeplätze 58 stehen zur Verfügung. Daher sollten bei einer entsprechend hohen Kanallast in die Warteschlange 57 nur Datenpakete 43 mit einer entsprechend hohen Priorität eingestellt werden.

Zwar könnte das Aussortieren durch Nachrichtenerzeugungseinrichtung 42 vorgenommen werden, unter den oben genannten technischen Randbedingungen, die Filterung so früh wie möglich stattfinden zu lassen, sollte bereits das zweite Vorfilter 48 entscheiden, ob ein empfangenes Datenpaket 43 mit einer potentiell weiterzuleitenden Car2X-Nachricht 17 überhaupt entpackt und zur Nachrichtenerzeugungseinrichtung 42 übergeben wird. Kann bereits aus einem empfangenen Datenpaket 43 selbst heraus erkannt werden, dass es eine niederprioritäre Car2X-Nachricht 17 trägt, dann sollte es im Falle weniger freier Sendeplätze 58 und damit im Falle einer hohen Kanallast bereits im zweiten Vorfilter 48 aussortiert werden.

Nachstehend wird ein weiterer Aspekt der Erfindung erläutert, der ein Auswahlverfahren zur Reduzierung des Rechenaufwands eines Fahrzeug-zu-X-Kommunikationssystems gemäß Oberbegriff von Satz 1 betrifft.

Im Stand der Technik sind sogenannte Fahrzeug-zu-X-Kommunikationssysteme bekannt, die sowohl zur Übertragung verkehrsbezogener Daten als auch verschiedener Service-Daten, wie etwa Unterhaltungsanwendungen, ausgebildet sind. Die Fahrzeug-zu-X-Kommunikation basiert dabei sowohl auf dem Datenaustausch zwischen Fahrzeugen untereinander (Fahrzeug-zu-Fahrzeug-Kommunikation) als auch auf dem Datenaustausch zwischen Fahrzeugen und Infrastruktureinrichtungen (Fahrzeug-zu-Infrastruktur-Kommunikation). Aufgrund der hohen Anforderungen an die Zuverlässigkeit und Datensicherheit von mittels Fahrzeug-zu-X-Kommunikation übertragenen Informationen, werden derartige Informationen zusätzlich oftmals mit einer aufwändigen Sicherheitssignatur bzw. Datenverschlüsselung versehen.

Die Auswertung einer derartigen Sicherheitssignatur bzw. die Decodierung einer derartigen Datenverschlüsselung sind jedoch mit verhältnismäßig hohem Rechenaufwand verbunden. Hinzu kommt das Auftreten besonderer Situationen, wie etwa das Passieren einer vielbefahrenen innerstädtischen Kreuzung zur Hauptverkehrszeit, in denen eine derart große Anzahl an Fahrzeug-zu-X-Botschaften empfangen wird, dass eine Verarbeitung aller empfangenen Fahrzeug-zu-X-Botschaften ebenfalls nur durch das Bereitstellen einer vergleichsweise großen Rechenleistung möglich ist. Um den Rechenaufwand und damit die Beschaffungskosten für ein Rechenmodul eines derartigen Fahrtzeug-zu-X-Kommunikationssystems möglichst gering zu halten, sind im Stand der Technik weiterhin unterschiedliche Vorverarbeitungsverfahren bekannt, die unter allen empfangenen Fahrzeug-zu-X-Botschaften eine Auswahl der zu decodierenden Fahrzeug-zu-X-Botschaften treffen. Derartige Vorverarbeitungsverfahren beziehen sich jedoch nur auf diejenigen Fahrzeug-zu-X-Botschaften, die für den die Vorverarbeitung ausführenden Empfänger bestimmt sind. Somit bleibt bei den im Stand der Technik bekannten Vorverarbeitungsverfahren außer Acht, dass der Empfänger von Fahrzeug-zu-X-Botschaften eine Vielzahl der empfangenen Fahrzeug-zu-X-Botschaften gemäß dem sogenannten Georouting-Verfahren weiterleitet, um sie anderen Empfängern in einem vorbestimmten Gebiet zuzuführen. Das Georouting-Verfahren stellt jedoch vergleichsweise hohe Anforderungen an die zur Verfügung stehende Rechenleistung, da die entsprechenden Weiterleite-Algorithmen aufwändig sind.

Es ist daher die Aufgabe des weiteren Aspekts der Erfindung, durch eine möglichst frühzeitige Filterung die Anzahl der durch das Georouting-Verfahren zu bearbeitenden Datenpakete zu reduzieren.

Diese Aufgabe wird erfindungsgemäß gelöst durch das Verfahren zum Weiterleiten eines wenigstens Positionsdaten enthaltenden Datenpakets nach Anspruch 1.

Dabei kommen bevorzugt gemeinsam oder alternativ zwei Verfahren zum Einsatz, die Wissen über die physikalische Übertragung ausnutzen:
Zum Einen ist es bevorzugt, dass empfangene Datenpakete mit hoher Empfangsfeldstärke in Hochlastsituationen, also in Situationen mit hoher Rechenauslastung des Fahrzeug-zu-X-Kommunikationssystems, nicht dem Georouting-Verfahren zugeführt werden. Dies ist dadurch motiviert, dass eine hohe Empfangsfeldstärke aus einer geringen Distanz zwischen Sender und Empfänger resultiert. Diese geringe Distanz wiederum bedeutet, dass eine Weiterleitung des Datenpakets durch das Fahrzeug-zu-X-Kommunikationssystem des Empfängers das Verbreitungsgebiet der entsprechenden Fahrzeug-zu-X-Botschaft kaum erhöht. Es ist daher davon auszugehen, dass das vergleichsweise komplexe und rechenintensive Georouting-Verfahren das Paket ohnehin nicht weiterleiten würde. Da das Datenpaket vorteilhafterweise aber gar nicht erst dem Georouting-Verfahren zugeführt wird, entfällt die notwendige Rechenleistung zur Entscheidung über die Weiterleitung anhand der komplexen Weiterleite-Algorithmen des Georouting-Verfahrens. Der Schwellwert für eine "hohe Feldstärke" kann dabei entweder fest vorgegeben werden bzw. anhand einer statistischen Betrachtung über ein gleitendes Zeitfenster der Länge T flexibel und situationsabhängig gewählt werden. In diesem Zeitfenster T kann dann beispielsweise ein oberes Perzentil der Empfangsfeldstärke als "hohe Feldstärke" angesehen werden, z.B. P75 (also die oberen 75% der Feldstärken in diesem Zeitfenster). Umgekehrt werden Pakete mit niedriger Empfangsfeldstärke priorisiert dem Georouting-Verfahren zugeführt.

Zum Anderen ist es bevorzugt, dass auf Basis der durch die sogenannten Traffic Classes definierten Priorität eines Datenpakets zunächst überprüft wird, ob ein Weiterleiten bzw. Versenden eines Datenpakets mit dieser Traffic Class bei der aktuellen Kanallast überhaupt erfolgreich wäre. Ab einer gewissen Kanallast, d.h. einer gewissen Auslastung der zu Übertragung der Fahrzeug-zu-X-Botschaften genutzten Übertragungskanäle, werden einige Datenpakete bzw. Fahrzeug-zu-X-Botschaften nämlich abhängig von ihrer Traffic Class nicht mehr versendet, um die Übertragungskanäle nicht zu "verstopfen" und somit eine Versenden von sicherheitskritischen Datenpaketen auch bei hoher Kanallast noch zu gewährleisten. Nur wenn dies wahrscheinlich ist, wird das empfangene Datenpaket dem Georouting-Verfahren zugeführt. Für die Ermittlung der Wahrscheinlichkeit können beispielsweise feste Schwellwerte der Kanallast verwendet werden oder diese mittels statistischer Methoden, ähnlich der oben beschriebenen Vorgehensweise, situationsabhängig bestimmt werden. Modellbasierte Methoden mit entsprechenden Modellen des Übertragungskanals sind ebenfalls bevorzugt, obwohl hier ggf. ein vergleichsweise hoher Rechenaufwand für das Model selbst entstehen kann.

Die Erfindung beschreibt somit ein Verfahren, welches die Effizienz des Georouting-Verfahrens verbessert, da der Anteil an vom Georouting-Verfahren untersuchten Nachrichten, die nicht erfolgreich erneut ausgesendet werden können oder überhaupt erneut versendet werden müssen, reduziert wird.
Hierdurch sinkt die benötigte Rechenleistung für das gesamte Fahrzeug-zu-X-Kommunikationssystem deutlich. Dies wiederum ermöglicht die Verwendung von weniger rechenstarken und damit kostengünstigeren Recheneinheiten.

Zudem kann durch das erfindungsgemäße Verfahren ein Fahrzeug-zu-X-Kommunikationssystem, welches normalerweise aufgrund seiner schwachen Rechenleistung überhaupt kein Georouting-Verfahren durchführen könnte, zumindest einige wichtige Datenpakete weiterleiten.

Die Weiterleitung der empfangenen Fahrzeug-zu-X-Botschaften an weitere Empfänger erfolgt dabei bevorzugt gemäß dem sogenannten Multi-Hopp verfahren.

Eine Fahrzeug-zu-X-Botschaft besteht bzw. umfasst bevorzugt eine Reihe von Datenpaketen, welche jeweils eine Information oder mehrere zusammenhängende Informationen zu einem bestimmten Aspekt der Fahrzeugumwelt bzw. des Verkehrsgeschehens beschreiben.

Weitere bevorzugte Ausführungsformen ergeben sich aus den Unteransprüchen und der nachfolgenden Beschreibung eines Ausführungsbeispiels an Hand von Figuren.

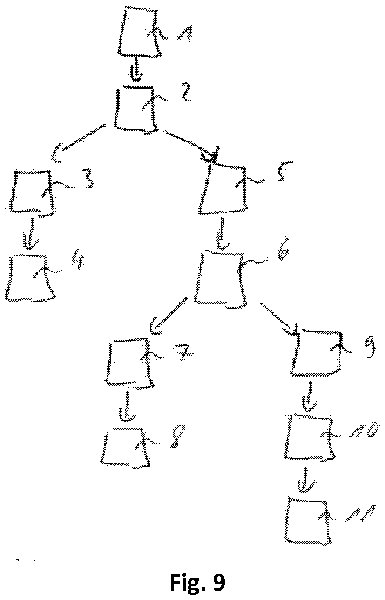

Es zeigt
- Fig. 9: beispielhaft einen möglichen Ablauf des erfindungsgemäßen Verfahrens in Form eines Flussdiagramms.

Die Bezugszeichen der Fig. 9 beschreiben andere technische Elemente, als die Bezugszeichen der Fig. 1 bis 8.

Fig. 9 zeigt beispielhaft einen möglichen Ablauf des erfindungsgemäßen Verfahrens in Form eines Flussdiagramms. In Verfahrensschritt 1 wird von einem Fahrzeug-zu-X-Kommunikationssystem eines Kraftfahrzeugs eine Fahrzeug-zu-X-Botschaft empfangen. Bei der empfangenen Fahrzeug-zu-X-Botschaft handelt es sich um eine sogenannte Decentralized Environmental Notification Messages (DENM), deren Header ein Verbreitungsgebiet vorschreibt, für welches die Fahrzeug-zu-X-Botschaft relevant ist und in welchem sie dementsprechend weiterverbreitet werden soll. Der Header enthält weiterhin eine Information über die Priorität der Fahrzeug-zu-X-Botschaft. Diese ist als gering gekennzeichnet. In Schritt 2 wird die Empfangsfeldstärke der Fahrzeug-zu-X-Botschaft an den Antennen des Fahrzeug-zu-X-Kommunikationssystems bestimmt. Sofern in Schritt 3 festgestellt wird, dass die Empfangsfeldstärke oberhalb einer fest vorgegebenen Schwelle liegt, wird in Schritt 4 entschieden, die empfangene Fahrzeug-zu-X-Botschaft nicht an das Georouting-Verfahren weiterzugeben, da diese ohnehin von einem Sender in unmittelbarer Nähe zum empfangenden Kraftfahrzeug versendet wird. Ein zusätzliches Weiterleiten durch der Fahrzeug-zu-X-Botschaft durch das empfangende Kraftfahrzeug bringt somit keine Vorteile für die Verbreitung der Fahrzeug-zu-X-Botschaft. Sofern in Schritt 5 jedoch festgestellt wird, dass die Empfangsfeldstärke unterhalb der fest vorgegebenen Schwelle liegt, wird in folgenden Schritt 6 zunächst die Kanallast der zur Übertragung genutzten bzw. zur Verfügung stehenden Kommunikationskanäle bestimmt. Beispielsgemäß handelt es sich um WLAN-Übertragungskanäle nach IEEE 802.11p. Falls in Verfahrensschritt 7 weiterhin festgestellt wird, dass die Kanallast zu hoch ist, um das Weiterleiten der empfangenen Fahrzeug-zu-X-Botschaft aufgrund deren niedriger Priorität sicherstellen zu können, wird in Schritt 8 entschieden, die empfangene Fahrzeug-zu-X-Botschaft nicht an das Georouting-Verfahren weiterzugeben. Falls in Schritt 9 jedoch festgestellt wird, dass die Kanallast ausreichend niedrig ist, um das Weiterleiten der empfangenen Fahrzeug-zu-X-Botschaft aufgrund deren niedriger Priorität sicherstellen zu können, wird diese in Schritt 10 an das Georouting-Verfahren weitergegeben und in Schritt 11 erneut versendet.

## Patentansprüche

1. Verfahren zum Weiterleiten eines wenigstens Positionsdaten (16) enthaltenden Datenpakets (43), das über einem Fahrzeug-Ad-hoc-Netzwerk (1) in einem Übertragungssignal (18) getragen empfangen wird, umfassend:
- Filtern (47, 48) des empfangenen Datenpaketes (43) basierend auf einer vorbestimmten Filterbedingung (54),
- Weiterleiten (42) des gefilterten Datenpaketes (50) zu einem weiteren Empfänger basierend auf einer Identifizierung (39), ob das gefilterte Datenpaket (50) zu dem weiteren Empfänger weitergeleitet werden soll,
**dadurch gekennzeichnet, dass**
- die vorbestimmte Filterbedingung (54) eine vorbestimmte Empfangsfeldstärke (54) umfasst, mit der das das weiterzuleitende Datenpaket (43) tragende Übertragungssignal (18) empfangen werden muss, wobei das empfangene Datenpaket (43) ausgefiltert wird, wenn das das empfangene Datenpaket (43) tragende Übertragungssignal (18) eine Empfangsfeldstärke (52) besitzt, die die vorbestimmte Empfangsfeldstärke (54) überschreitet, und/oder
- das weiterzuleitende Datenpaket (43, 50) eine Nachricht (17) mit einer Priorität enthält, und wobei die vorbestimmte Filterbedingung (54) eine vorbestimmte Priorität für die Priorität der Nachricht (17) ist, wobei das weiterzuleitende Datenpaket (43, 50) gefiltert wird, wenn die Priorität der Nachricht (17) kleiner ist, als die vorbestimmte Priorität, wobei die vorbestimmte Priorität unter Berücksichtigung einer Kanallast von zur Übertragung genutzten Kommunikationskanälen angepasst wird.

2. Verfahren nach Anspruch 1, wobei die vorbestimmte Empfangsfeldstärke (54) von einer statistischen Bedingung (56) abhängig ist, die basierend auf einer Anzahl von über einen vorbestimmten Zeitraum (55) empfangenen Datenpaketen (43) bestimmt wird.

3. Verfahren nach Anspruch 2, wobei die statistische Bedingung (56) ein bestimmtes Quantil (56) an über den vorbestimmten Zeitraum (55) in dem Übertragungssignal (18) empfangenen Datenpakete (43) ist.

4. Weiterleitungsvorrichtung (39, 42, 47, 48) zur Durchführung eines Verfahrens nach einem der vorstehenden Ansprüche, die einen Speicher und einen Prozessor aufweist, wobei das Verfahren in Form eines Computerprogramms in dem Speicher hinterlegt ist und der Prozessor zur Ausführung des Verfahrens ausgelegt ist, wenn das Computerprogramm aus dem Speicher in den Prozessor geladen ist.

5. Transceiver (16) für ein Fahrzeug (3) zum Weiterleiten von in einem Übertragungssignal (18) versendeten Datenpaketen (43) in einem Fahrzeug-Ad-Hoc-Netzwerke (1), umfassend:
- eine Antenne (19) zum Empfangen des Übertragungssignals (18),
- eine Weiterleitungsvorrichtung (39, 42, 47, 48) nach Anspruch 4 zum Weiterleiten wenigstens eines Teils der Datenpakete (43) aus dem Übertragungssignal (18).

## Claims

1. Method for forwarding a data packet (43), containing at least position data (16), that is received via a vehicle ad-hoc network (1) and carried in a transmission signal (18), comprising:
- filtering (47, 48) the received data packet (43) on the basis of a predetermined filter condition (54),
- forwarding (42) the filtered data packet (50) to a further receiver on the basis of an identification (39) of whether the filtered data packet (50) is supposed to be forwarded to the further receiver,
**characterized in that**
- the predetermined filter condition (54) comprises a predetermined reception field strength (54) with which the transmission signal (18) carrying the data packet (43) to be forwarded needs to be received, wherein the received data packet (43) is filtered out if the transmission signal (18) carrying the received data packet (43) has a reception field strength (52) that exceeds the predetermined reception field strength (54), and/or
- the data packet (43, 50) to be forwarded contains a message (17) having a priority, and wherein the predetermined filter condition (54) is a predetermined priority for the priority of the message (17), wherein the data packet (43, 50) to be forwarded is filtered if the priority of the message (17) is lower than the predetermined priority, wherein the predetermined priority is adapted by taking into consideration a channel load of communication channels used for transmission.

2. Method according to Claim 1, wherein the predetermined reception field strength (54) is dependent on a statistical condition (56) that is determined on the basis of a number of data packets (43) received over a predetermined period (55).

3. Method according to Claim 2, wherein the statistical condition (56) is a specific quantile (56) of data packets (43) received in the transmission signal (18) over the predetermined period (55).

4. Forwarding apparatus (39, 42, 47, 48) for performing a method according to one of the preceding claims, which comprises a memory and a processor, wherein the method is stored in the memory in the form of a computer program and the processor is designed to carry out the method when the computer program is loaded from the memory into the processor.

5. Transceiver (16) for a vehicle (3) for forwarding data packets (43) sent in a transmission signal (18) in a vehicle ad-hoc network (1), comprising:
- an antenna (19) for receiving the transmission signal (18),
- a forwarding apparatus (39, 42, 47, 48) according to Claim 4 for forwarding at least some of the data packets (43) from the transmission signal (18).

## Revendications

1. Procédé permettant de retransmettre au moins un paquet de données (43) contenant des données de position (16) et reçu par un réseau ad hoc de véhicule (1) en étant porté dans un signal de transmission (18), comprenant les étapes consistant à :
- filtrer (47, 48) le paquet de données (43) reçu sur la base d'une condition de filtrage prédéterminée (54),
- retransmettre (42) le paquet de données filtré (50) à un autre destinataire sur la base d'une identification (39) si le paquet de données filtré (50) doit être retransmis à l'autre destinataire,
**caractérisé en ce que**
- la condition de filtrage prédéterminée (54) comprend une intensité de champ de réception prédéterminée (54) à laquelle le signal de transmission (18) portant le paquet de données (43) à retransmettre doit être reçu, le paquet de données (43) reçu étant filtré si le signal de transmission (18) portant le paquet de données (43) reçu possède une intensité de champ de réception (52) qui dépasse l'intensité de champ de réception prédéterminée (54), et/ou
- le paquet de données (43, 50) à retransmettre contient un message (17) ayant une priorité, et la condition de filtrage prédéterminée (54) est une priorité prédéterminée pour la priorité du message (17), le paquet de données (43, 50) à retransmettre étant filtré si la priorité du message (17) est inférieure à la priorité prédéterminée, la priorité prédéterminée étant adaptée en tenant compte d'une charge de canal des canaux de communication utilisés pour la transmission.

2. Procédé selon la revendication 1, dans lequel l'intensité de champ de réception prédéterminée (54) dépend d'une condition statistique (56) qui est déterminée sur la base d'un nombre de paquets de données (43) reçus sur une période prédéterminée (55).

3. Procédé selon la revendication 2, dans lequel la condition statistique (56) est un quantile déterminé (56) de paquets de données (43) reçus sur la période prédéterminée (55) dans le signal de transmission (18).

4. Dispositif de retransmission (39, 42, 47, 48) pour effectuer un procédé selon l'une quelconque des revendications précédentes qui présente une mémoire et un processeur, le procédé étant stocké dans la mémoire sous la forme d'un programme informatique, et le processeur étant conçu pour effectuer le procédé si le programme informatique est chargé de la mémoire sur le processeur.

5. Emetteur-récepteur (16) pour un véhicule (3), destiné à retransmettre des paquets de données (43) envoyés dans un signal de transmission (18) sur un réseau ad hoc de véhicule (1), comprenant :
une antenne (19) pour recevoir le signal de transmission (18),
un dispositif de retransmission (39, 42, 47, 48) selon la revendication 4 pour retransmettre au moins une partie des paquets de données (43) provenant du signal de transmission (18).
